# EUROPÄISCHE PATENTSCHRIFT

(11) **EP 1 713 604 B1**
(45) Veröffentlichungstag und Bekanntmachung des Hinweises auf die Patenterteilung: **23.07.2008**
(21) Anmeldenummer: 05706183.0
(22) Anmeldetag: 08.02.2005
(51) Int. Cl.: B23B 27/04

(54) **SCHNEIDEINSATZ UND WERKZEUG FÜR SEINE VERWENDUNG**
CUTTING INSERT AND TOOL FOR USING THE SAME
INSERT DE COUPE ET OUTIL POUR S'EN SERVIR

(30) Priorität: 11.02.2004 AT 10204 U
(43) Veröffentlichungstag der Anmeldung: 25.10.2006
(73) Patentinhaber: CERATIZIT Austria Gesellschaft m.b.H., 6600 Reutte (AT)
(72) Erfinder: BERGER, Dietmar, A-6600 Lechaschau (AT); GÖBERL, Christian, A-6600 Breitenwang (AT); SCHLEINKOFER, Uwe, A-6600 Reutte (AT); VENTURINI, Remus, 87672 Rosshaupten (DE)
(86) Internationale Anmeldenummer: PCT/AT2005/000040
(87) Internationale Veröffentlichungsnummer: WO 2005/077578

(56) Entgegenhaltungen:
- DE-A1- 2 256 918
- DE-A1- 4 415 425
- DE-C- 750 725
- US-A- 4 580 930

## Beschreibung

Die Erfindung betrifft einen Schneideinsatz welcher aus einer Mehrzahl von hintereinander angeordneten, zusammenhängenden Einzelschneideinsätzen besteht, welche über eine jeweils dazwischenliegende Sollbruchstelle durch Abtrennen des jeweils zuvor in Schneideinsatz stehenden Einzelschneideinsatzes nacheinander zum Einsatz bringbar sind.

Ein Schneideinsatz gemäß dem Oberbegriff von Anspruch 1 ist aus der DE 750 725 bekannt. Er ist aus keramischem Werkstoff. Diese Schneideinsätze sind in sehr allgemeiner Form für die unterschiedlichsten, spanabhebenden Werkzeuge beschrieben. Spezielle Schneideinsätze für Stechwerkzeuge oder Scheibenfräser, insbesondere eine Möglichkeit der lagerichtigen Einstellung von neuen Einzelschneideinsätzen bei derartigen Werkzeugen ist dieser Veröffentlichung jedoch nicht zu entnehmen.

Es ist eine Vielzahl von unterschiedlichen Stechwerkzeugen bekannt, die einen dünnen, klingenförmigen Werkzeugabschnitt aufweisen, in dem Schneideinsätze aus verschleißfestem Material, in der Regel aus Hartmetall, auswechselbar aufgenommen sind. Die Schneideinsätze weisen dabei eine oder maximal zwei einsetzbare Schneidkanten auf, so dass bei Verschleiß einer Schneidkante der Schneideinsatz entweder ausgewechselt oder gewendet werden muss.

Derartige Stechwerkzeuge sind beispielsweise in der DE 25 33 035 oder DE 24 55 092 beschrieben.
Ähnliche Schneideinsätze kommen auch bei verschiedenen Scheibenfräsern zum Einsatz.
Nachteilig dabei ist, dass sowohl bei Schneideinsätzen mit einer Schneidkante, als auch bei Schneideinsätzen mit zwei Schneidkanten je nach Einsatzfall schon nach relativ kurzen Zeiten das Werkzeug mit einem neuen Schneideinsatz bestückt werden muss, was immer mit erheblichen Maschinenstillstandszeiten verbunden ist.

Die Aufgabe der vorliegenden Erfindung ist es daher, einen Schneideinsatz zur Verfügung zu stellen, der über eine möglichst große Zahl von nacheinander einsetzbaren Schneidkanten verfügt und der auch bei Stechwerkzeugen und Scheibenfräsern eine problemlose, lagerichtige Positionierung der einzelnen Schneidkanten ermöglicht.

Erfindungsgemäß wird dies durch einen Schneideinsatz gemäß Anspruch 1 erreicht.

Dadurch wird erreicht, dass auf eine einfache Weise möglichst problemlos und lagerichtig eine neue Schneidkante zum Einsatz gebracht werden kann. Die Maschinenstillstandzeiten können dementsprechend reduziert werden. Insbesondere bei kleinen Stechbreiten und Stechtiefen waren die bisher üblichen, nicht zusammenhängenden Einzelschneideinsätze nur schwer zu handhaben. Durch die Vielzahl von hintereinander angeordneten Einzelschneideinsätzen entsprechend der Erfindung wird ein wesentlich besseres Handling des Schneideinsatzes erreicht.
Weiterhin können durch die erfindungsgemäße Ausführung Stechtiefen erreicht werden, die bisher mit bekannten Schneideinsätzen zum Stechen, die mehr als zwei nacheinander zum Einsatz bringbare Schneidkanten aufweisen, nicht erreicht werden konnten. Darüber hinaus wird auch die Lagerhaltung derartiger Schneideinsätze wesentlich kostengünstiger.

Dadurch, dass die Positioniereinrichtung durch ein oder mehrere Vorsprünge und/oder Ausnehmungen in der unteren und/oder oberen Anlagefläche gebildet ist, welche mit der Positioniereinrichtung mit entsprechend komplementär ausgeführten Vorsprüngen und/oder Ausnehmungen in der unteren und/oder oberen Gegenfläche der Ausnehmung im Werkzeuggrundkörper zusammenwirken, wird auf einfache Weise eine gute Positionierung der einzelnen Schneidkanten der Einzelschneideinsätze erreicht, wobei die Wahlmöglichkeit über die Anzahl und Art der genauen Anordnung der einzelnen Vorsprünge und/oder Ausnehmungen eine gezielte Anpassung an die jeweilig konstruktive Ausführung des Stechwerkzeuges oder Scheibenfräsers ermöglicht.

Am einfachsten wird der erfindungsgemäße Schneideinsatz vorzugsweise aus Hartmetall als einstückig ausgeformtes und gesintertes Formteil hergestellt. Mit einem einzigen Formteil kann damit eine große Anzahl von nacheinander einsetzbaren Schneidkanten realisiert werden. Die Ausformung des Schneideinsatzes kann dabei in besonders vorteilhafter Weise durch ein MIM-Verfahren (metal injection molding) erfolgen.

Die erfindungsgemäße Ausführung hat sich insbesondere bei Stech- bzw. Schlitzbreiten im Bereich von 1 bis 2 mm bewährt, aber auch bei größeren und kleineren Breiten ist die Erfindung noch gut anwendbar.

Die einzelnen Sollbruchstellen werden erfindungsgemäß durch einen Schlitz gebildet der eine teilweise Freistellung der Freiflächen der Einzelschneideinsätze gegenüber der Endfläche des jeweils zuvor angeordneten Einzelschneideinsatzes bewirkt.

Der Schlitz kann dabei in Abhängigkeit von der Klingenstärke des Schneideinsatzes so tief vorgesehen werden, dass einerseits ein leichtes Abtrennen der Einzelschneideinsätze erreicht wird und andererseits der Schneideinsatz noch ausreichende Festigkeit für sein Handling aufweist damit Einzelschneideinsätze nicht unbeabsichtigt voneinander getrennt werden. Gleichzeitig wird durch die Freistellung erreicht, dass die Schneidkante und der obere Bereich der Freifläche beim Abtrennen der Einzelschneideinsätze nicht beschädigt werden. Wenn der Verbindungsabschnitt der einzelnen Einzelschneideinsätze in der Stärke des unteren Abschnittes des Einsatzbereiches ausgeführt ist, ist der Einsatzbereich im oberen Schneidkantenbereich aufgrund des seitlichen Freiwinkels des Einzelschneideinsatzes jeweils dicker ausgeführt. Wenn nun das Ende der Schneidkante radiusförmig in den an dieser Stelle dünneren Verbindungsabschnitt übergeht, kann durch die Wahl der Breite und/oder Lage des Schlitzes zum vorhergehenden Einzelschneideinsatz, die Ausführung der Schneidkante genau festgelegt werden. So kann sie beispielsweise seitlich scharfkantig, mit mehr oder weniger großem Übergangsradius, oder nach links oder rechts schräggestellt ausgeführt sein.

Der Winkel α, den der Schlitz mit einer Senkrechten zur unteren Anlagefläche des Schneideinsatzes einschließt, bestimmt den vorderen Freiwinkel der Schneidkante des jeweiligen Einzelschneideinsatzes und liegt erfindungsgemäß im Bereich von 0° bis 45°.

Die Endfläche des Schlitzes verläuft erfindungsgemäß seitlich gesehen so, dass sie gegenüber der unteren Anlagenfläche des Schneideinsatzes einen tiefsten Punkt aufweist, der von der Senkrechten auf die Anlagefläche durch die Schneidkante, von der Schneidkante weg in Richtung auf das Ende jedes Einzelschneideinsatzes hin beabstandet ist, oder diese Senkrechte in der Gegenrichtung zumindest nicht überschreitet. Das wird beispielsweise dadurch erreicht, dass der Grund des Schlitzes entweder als schräg abfallende Gerade oder als Radius ausgeführt wird. Bei einem Abbrechen eines Einzelschneideinsatzes wird dadurch mit Sicherheit verhindert, dass Abschnitte im unteren Bereich der Freifläche zu weit vorstehen und Probleme bei der Zerspanung bilden.

Am einfachsten lässt sich der Schlitz durch einen Schleifprozess mit einer dünnen scheibenförmigen Schleifscheibe herstellen.

Um eine sichere stabile Anlage jedes Einzelschneideinsatzes in der Aufnahme des Werkzeuggrundkörpers zu erreichen ist es von Vorteil, wenn jeder Einzelschneideinsatz aus einem Spannbereich und einem Einsatzbereich besteht, wobei je nach ausgeführter Stech- bzw. Nutbreite die Dicke D des Spannbereiches im Bereich von 1 bis 10 mal der Dicke d des Einsatzbereiches liegt.

Das Stechwerkzeug oder der Scheibenfräser aus einem Werkzeuggrundkörper mit einer langgestreckten Ausnehmung und einer Positioniereinrichtung zur Aufnahme eines erfindungsgemäßen Schneideinsatzes ist vorteilhafterweise so ausgeführt, dass der Werkzeuggrundkörper im vorderen Bereich der Ausnehmung einen Längsschlitz aufweist, derart, dass eine federnde Klemmpratze gebildet ist, welche zur Fixierung des Schneideinsatzes über eine Klemmschraube mit dem starren Teil des Werkzeuggrundkörpers verspannbar ist.
Dadurch wird auf einfache Weise eine sichere Klemmung des Schneideinsatzes im Werkzeuggrundkörper erreicht.

Um die Führung und die Fixierung des langen Schneideinsatzes in der Ausnehmung des Werkzeuggrundkörpers zu verbessern ist es besonders zweckmäßig, wenn in der Seitenfläche der Ausnehmung ein oder mehrere Magnete eingearbeitet sind, welche den klingenförmigen Schneideinsatz an die Seitenfläche ziehen.

Das Entfernen eines verschlissenen Einzelschneideinsatzes erfolgt am zweckmäßigsten bei fest eingespanntem Schneideinsatz, wobei der nächstfolgende, unverschlissene Einzelschneideinsatz bereits in Arbeitsposition steht. Der vorstehende, verschlissene Einzelschneideinsatz kann dann durch Aufbringung einer seitlichen Kraft mit einem geeigneten Werkzeug abgetrennt werden.

Ein besonders leichtes Abtrennen der einzelnen verschlissenen Einzelschneideinsätze lässt sich dadurch erreichen, dass der Spannschlüssel zum Verschrauben der Klemmschraube bei einem erfindungsgemäßen Stechwerkzeug oder Scheibenfräser im Handgriff eine Ausnehmung zur Aufnahme des klingenförmigen Schneideinsatzes zumindest über einen Teilbereich eines Einzelschneideinsatzes aufweist.

Im Folgenden wird die Erfindung an Hand von Figuren näher erläutert.
Es zeigen:
- Figur 1a: einen erfindungsgemäßen Schneideinsatz in Schrägansicht
- Figur 1b: einen erfindungsgemäßen Schneideinsatz in Seitenansicht
- Figur 1c: die vergrößerte Detailansicht eines erfindungsgemäßen Schneideinsatzes im Bereich einer Sollbruchstelle in Seitenansicht
- Figur 1d: die vergrößerte Detailansicht eines erfindungsgemäßen Schneideinsatzes im Bereich einer Sollbruchstelle in Draufsicht

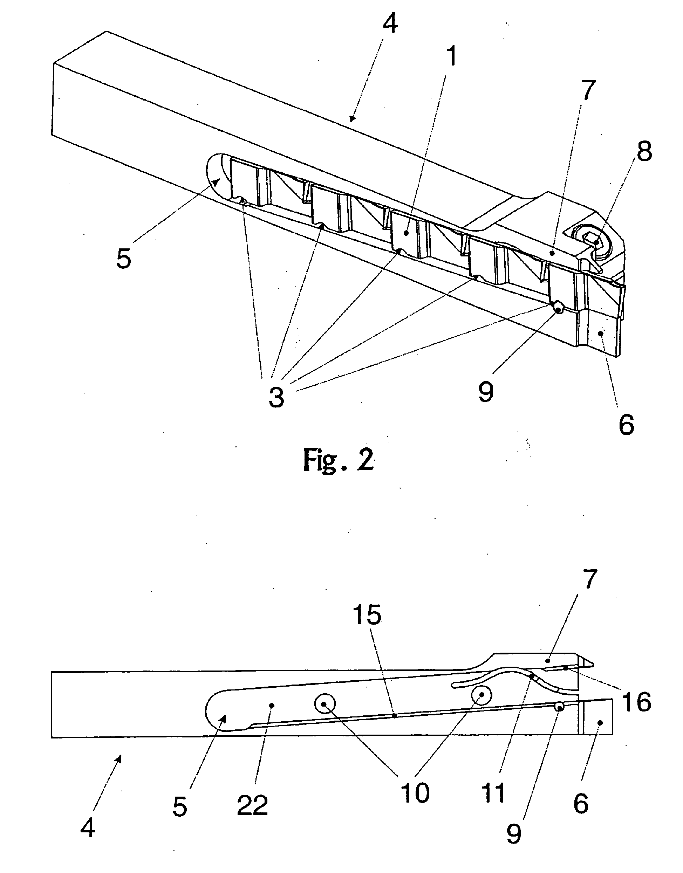

- Figur 2: ein Stechwerkzeug mit einem erfindungsgemäßen Schneideinsatz in Schrägansicht
- Figur 3: das Schneidwerkzeug nach Fig. 2, ohne Schneideinsatz in Seitenansicht
- Figur 4a: den Spannschlüssel für ein Stechwerkzeug nach Fig. 2 in Schrängansicht
- Figur 4b: den Spannschlüssel nach Figur 4a mit eingeschobenem Schneideinsatz in Seitenansicht

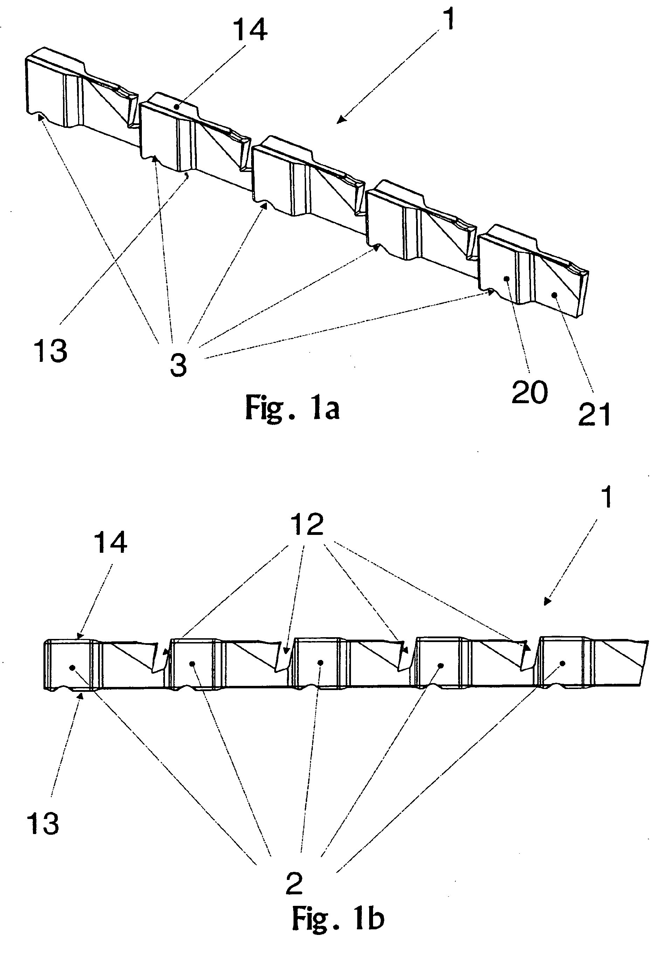

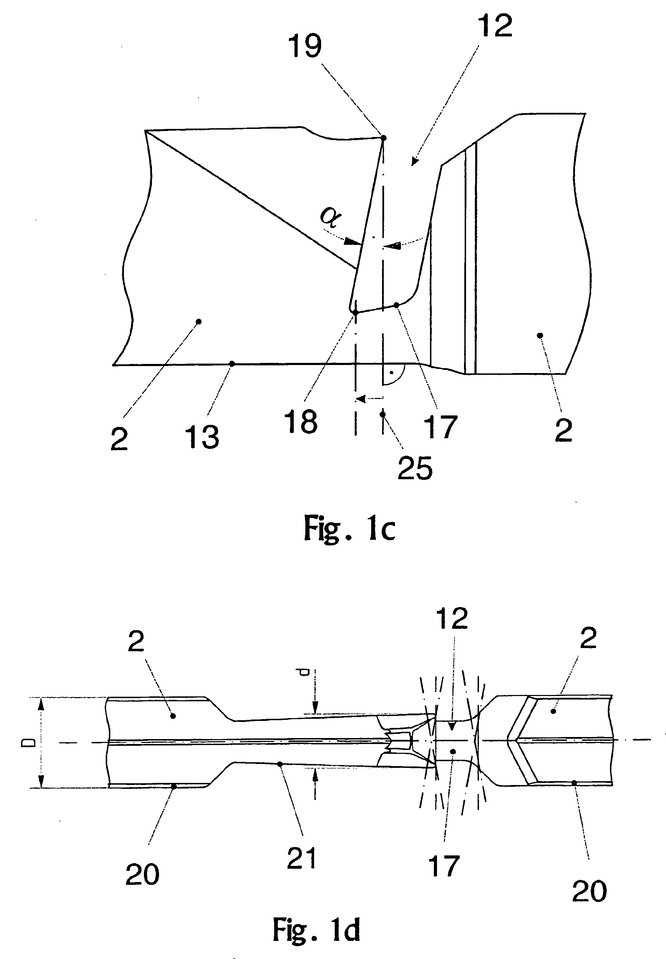

Der erfindungsgemäße Schneideinsatz -1- besteht aus fünf Einzelschneideinsätzen -2- welche hintereinander zusammenhängend angeordnet sind. Dadurch, dass die Freiflächen der Einzelschneideinsätze -2- gegenüber der Endfläche des jeweils zuvor angeordneten Einzelschneideinsatzes -2- durch einen Schlitz -12- eine teilweise Freistellung aufweisen, werden Sollbruchstellen erzeugt, die ein leichtes Abtrennen von verschlissenen Einzelschneideinsätzen -2- ermöglichen. Die auf der Oberseite und Unterseite des Schneideinsatzes -1- liegenden Anlageflächen -14-, -13- weisen ein konkav V-förmiges Querschnittsprofil auf. Der Schneideinsatz -1- besteht aus Hartmetall und wurde einstückig gepresst und gesintert. An der unteren Anlagefläche -13- des Schneideinsatzes -1- ist eine Positioniereinrichtung -3- in Form von kerbenförmigen Vertiefungen am Ende jedes Einzelschneideinsatzes -2- vorgesehen, welche zur Positionierung der Einzelschneideinsätze -2- im Werkzeuggrundkörper -4- dienen. Die bevorzugte Ausgestaltung eines Schlitzes -12- im Bereich einer Sollbruchstelle zwischen zwei Einzelschneideinsätzen -2- ist in den Figuren 1c und 1d dargestellt. In der Seitenansicht nach Figur 1c verläuft der Schlitz -12- derart schräg, dass seine Seitenflächen mit einer Senkrechten -25- zur Anlagefläche -13- einen Winkel α von 11° einschließen, womit sich ein genügend großer Freiwinkel für die stirnseitige Freifläche jedes Einzelschneideinsatzes -2- ergibt. Die Endfläche -17- des Schlitzes -12- ist derart schräg geneigt, dass sich ein in Bezug auf die Anlagefläche -13- tiefster Punkt -18- ergibt, der von der Senkrechten -25- auf die Anlagefläche -13- durch die Schneidkante -19-, von der Schneidkante -19- weg in Richtung auf das Ende jedes Einzelschneideinsatzes -2- hin, beabstandet ist. Auf diese Weise wird erreicht, dass an der Sollbruchstelle mit ausreichender Sicherheit keine Abschnitte gebildet werden, welche die schräg verlaufende, darüberliegende Freifläche überragen und damit die Zerspanung negativ beeinflussen könnten.
In der Draufsicht nach Figur 1d ist durch die verschiedenen, strichlierten Linien angedeutet, wie durch die unterschiedliche seitliche Ausrichtung bzw. den unterschiedlichen Abstand des Schlitzes -12- vom vorhergehenden Einzelschneideinsatz -2-, unterschiedliche Schneidkanten -19- mit zur Längsachse des Schneideinsatzes -1- senkrechtem oder schrägem Verlauf oder mit mehr oder weniger großem seitlichen Eckenradius hergestellt werden können.

Der Werkzeuggrundkörper -4- zur Bestückung mit einem erfindungsgemäßen Schneideinsatz -1- ist als Stechwerkzeug ausgeführt und weist eine seitliche Ausnehmung -5- zur Aufnahme des Schneideinsatzes -1- auf. Das vordere Ende des Stechwerkzeuges -4- weist einen klingenförmig vorspringenden Abschnitt -6- zur Unterstützung des Einsatzbereiches -21- des jeweils in Schneidposition stehenden Einzelschneideinsatzes -2- auf, der mit seiner Anlagefläche für den Schneideinsatz -1- in die untere Gegenfläche -15- der Ausnehmung -5- übergeht. Beide Flächen weisen durchgehend einen konvex V-förmigen Querschnitt auf, in welche die im Querschnitt konkav V-förmige untere Anlagefläche -13- des Schneideinsatzes -1- eingreift. Weiters weist der Werkzeuggrundkörper -4- im vorderen Bereich der Ausnehmung -5- einen Längsschlitz -11- auf, wodurch eine federnde Klemmpratze -7- gebildet wird. Die Klemmpratze -7- ist auf ihrer Unterseite als obere Gegenfläche -16- der seitlichen Ausnehmung -5- ausgebildet. Die Gegenfläche -16- der Klemmpratze -7- weist ebenfalls einen konvex V-förmigen Querschnitt auf und greift in die im Querschnitt konkav V-förmige obere Anlagefläche -14- des Schneideinsatzes -1- ein. Durch Verschrauben der Spannschraube -8-, welche die federnde Klemmpratze -7- durchsetzt, mit dem starren unteren Teil des Werkzeuggrundkörpers -4-, wird der zum Einsatz vorgesehene Einzelschneideinsatz -2- über die Klemmpratze -7- festgeklemmt. Zur besseren Führung und zuverlässigen Positionierung des Schneideinsatzes -1- in der Ausnehmung -5- sind innerhalb der Ausnehmung -5- des Stechwerkzeuges Magnete -10- eingearbeitet, die den Schneideinsatz -1- an die Seitenfläche -22- der Ausnehmung -5- ziehen. Innerhalb der Ausnehmung -5- ist am vorderen Ende in der unteren Gegenfläche -15- eine Positioniereinrichtung -9- in Form eines Stiftes vorgesehen, der den Schneideinsatz -1- über die Kerben -3- in der richtigen Lage positioniert.

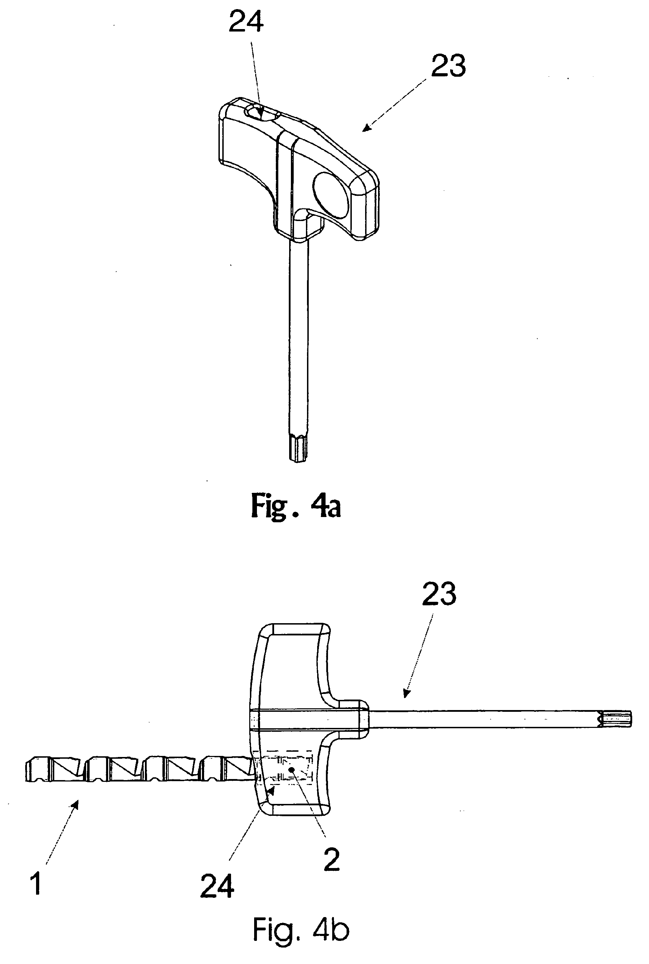

In den Figuren 4a und 4b ist ein Spannschlüssel -23- zum Verschrauben der Spannschraube -8- dargestellt. In den Handgriff des Spannschlüssels -23- ist eine Ausnehmung -24- eingearbeitet, in welche der Schneideinsatz -1- mit der Länge eines Einzelschneideinsatzes -2- eingeschoben werden kann. Durch seitliches Verkippen des Spannschlüssels -23- kann dann auf einfache Weise dieser Einzelschneideinsatz -2- vom Rest des Schneideinsatzes -1- abgetrennt werden.

## Patentansprüche

1. Klingenförmiger Schneideinsatz (1) mit unterer (13) und oberer Anlagefläche (14) zur Aufnahme in einer lang gestreckten Ausnehmung (5) mit unterer (15) und oberer Gegenfläche (16) im Werkzeuggrundkörper (4) eines Stechwerkzeuges oder Scheibenfräsers, welcher aus einer Mehrzahl von hintereinander angeordneten, zusammenhängenden Einzelschneideinsätzen (2) besteht, welche über eine jeweils dazwischenliegende Sollbruchstelle durch Abtrennen des jeweils zuvor in Schneideinsatz stehenden Einzelschneideinsatzes (2) nacheinander zum Einsatz bringbar sind und wobei die einzelnen Sollbruchstellen jeweils durch einen Schlitz (12) gebildet werden, der eine teilweise Freistellung der stirnseitigen Freiflächen der einzelnen Einzelschneideinsätze (2) gegenüber der Endfläche des jeweils zuvor angeordneten Einzelschneideinsatzes (2) bewirkt, und wobei der Schlitz (12) einen Winkel α von 0° bis 45° mit einer senkrechten zur unteren Anlagefläche (13) des Schneideinsatzes (2) einschließt,
**dadurch gekennzeichnet, dass** jeder Einzelschneideinsatz (2) mit einer Positioniereinrichtung (3) versehen ist, die mit einer komplementären Positioniereinrichtung (9) des Werkzeuggrundkörpers (4) zusammenwirkt und dass die Freifläche (17) des Schlitzes (12) seitlich gesehen so verläuft, dass sie gegenüber der unteren Anlagefläche (13) einen tiefsten Punkt (18) aufweist, der von einer Senkrechten (25) auf die Anlagefläche (13) durch die Schneidkante (19), von der Schneidkante (19) weg in Richtung auf das Ende jedes Einzelschneideinsatzes (2) hin beanstandet ist, oder diese Senkrechte (25) in der Gegenrichtung zumindest nicht überschreitet.

2. Klingenförmiger Schneideinsatz (1) nach Anspruch 1, **dadurch gekennzeichnet, dass** der Schlitz (12) durch einen Schleifprozess eingebracht ist.

3. Klingenförmiger Schneideinsatz (1) nach Anspruch 1 oder 2, **dadurch gekennzeichnet, dass** die Positioniereinrichtung (3) durch ein oder mehrere Vorsprünge und/oder Ausnehmungen in der unteren (13) und/oder oberen Anlagefläche (14) gebildet ist, welche mit der Positioniereinrichtung (9) mit entsprechend komplementär ausgeführten Vorsprüngen und/oder Ausnehmungen in der unteren (15) und/oder oberen Gegenfläche (16) der Ausnehmung (5) zusammenwirken.

4. Klingenförmiger Schneideinsatz (1) nach einem der Ansprüche 1 bis 3, **dadurch gekennzeichnet, dass** jeder Einzelschneideinsatz (2) aus einem Spannbereich (20) und einem Einsatzbereich (21) besteht, wobei die Dicke D des Spannbereiches (20) im Bereich von 1 bis 10 mal der Dicke d des Einsatzbereiches (21) liegt.

5. Klingenförmiger Schneideinsatz (1) nach einem der Ansprüche 1 bis 4, **dadurch gekennzeichnet, dass** er aus Hartmetall besteht und als einstückig ausgeformtes und gesintertes Formteil ausgeführt ist.

6. Stechwerkzeug oder Scheibenfräser aus einem Werkzeuggrundkörper (4) mit einer langgestreckten Ausnehmung (5) und einer Positioniereinrichtung (9) mit einem klingenförmigen Schneideinsatzes (1) nach einem der Ansprüche 1 bis 5 **dadurch gekennzeichnet, dass** der Werkzeuggrundkörper (4) im vorderen Bereich der Ausnehmung (5) einen Längsschlitz (11) aufweist, derart, dass eine federnde Klemmpratze (7) gebildet ist, welche zur Fixierung des Schneideinsatzes (1) über eine Klemmschraube (8) mit dem starren Teil des Werkzeuggrundkörpers (4) verspannbar ist.

7. Stechwerkzeug oder Scheibenfräser nach Anspruch 6 **dadurch gekennzeichnet, dass** in der Seitenfläche (22) der Ausnehmung (5) ein oder mehrere Magnete (10) zur besseren Führung und Fixierung des klingenförmigen Schneideinsatzes (1) eingearbeitet sind.

## Claims

1. Blade-shaped cutting insert (1) having a lower (13) and an upper (14) stop surface for accommodation in an elongate recess (5) having a lower (15) and an upper counterpart surface (16) in the tool basic body (4) of a plunging tool or side milling cutter, comprising a plurality of successively arranged, interconnected individual cutting inserts (2), which by means of a predetermined breaking point situated between each two may be brought successively into operation by detaching in each case the individual cutting insert (2) positioned at the front in the cutting insert and wherein the individual predetermined breaking points are formed in each case by a slot (12) that effects a partial exposure of the front free surfaces of the individual cutting inserts (2) relative to the end surface of the in each case preceding individual cutting insert (2) and wherein the slot (12) forms with a perpendicular to the lower stop surface (13) of the cutting insert (1) an angle α of 0° to 45°,
**characterized in**
**that** each individual cutting insert (2) is provided with a positioning device (3), which interacts with a complementary positioning device (9) of the tool basic body (4), and that the free surface (17) of the slot (12) viewed from the side extends in such a way as to have relative to the lower stop surface (13) a deepest point (18), which is spaced apart from a perpendicular (25) to the stop surface (13) through the cutting edge (19) in a direction away from the cutting edge (19) and towards the end of each individual cutting insert (2), or at least does not cross this perpendicular (25) in the opposite direction.

2. Blade-shaped cutting insert (1) according to claim 1, **characterized in that** the slot (12) is introduced by means of a grinding process.

3. Blade-shaped cutting insert (1) according to claim 1 or 2, **characterized in that** the positioning device (3) is formed by one or more projections and/or recesses in the lower (13) and/or upper stop surface (14) that interact with the positioning device (9), which comprises projections and/or recesses of a correspondingly complementary design in the lower (15) and/or upper counterpart surface (16) of the recess (5).

4. Blade-shaped cutting insert (1) according to one of claims 1 to 3, **characterized in that** each individual cutting insert (2) comprises a clamping region (20) and an operative region (21), wherein the thickness D of the clamping region (20) is in the region of 1 to 10 times the thickness d of the operative region (21).

5. Blade-shaped cutting insert (1) according to one of claims 1 to 4, **characterized in that** it is made of carbide metal and takes the form of an integrally constructed and sintered shaped part.

6. Plunging tool or side milling cutter comprising a tool basic body (4) having an elongate recess (5) and a positioning device (9) with a blade-shaped cutting insert (1) according to one of claims 1 to 5, **characterized in that** the tool basic body (4) in the front region of the recess (5) has a longitudinal slot (11) in such a way as to form a resilient clamping claw (7), which for fixing the cutting insert (1) may be braced by means of a clamping screw (8) with the rigid part of the tool basic body (4).

7. Plunging tool or side milling cutter according to claim 6, **characterized in that** in the lateral surface of the recess (5) one or more magnets (10) are incorporated for improved guidance and fixing of the blade-shaped cutting insert (1).

## Revendications

1. Insert de coupe (1) en forme de lames qui comprend des surfaces d'appui inférieure (13) et supérieure (14) et est prévu pour être reçu dans un évidement allongé longitudinalement (5) à contre-surfaces inférieure (15) et supérieure (16) ménagé dans un corps de base (4) d'outil d'un outil de soyage ou d'une fraise à disque, et qui consiste en une pluralité d'inserts de coupe individuels (2) disposés de façon continue l'un derrière l'autre, qui peuvent être mis en oeuvre l'un après l'autre en séparant, par l'effet d'un point destiné à la rupture, chacun d'eux de l'insert de coupe individuel (2) qui le précède respectivement dans l'insert de coupe, et dans lequel les points individuels destinés à la rupture consistent chacun en une fente (12) qui réalise une libération partielle de la surface libre frontale de chacun des inserts de coupe individuel (2) par rapport à la surface finale de l'insert de coupe individuel (2) qui le précède, et dans lequel la fente (12) forme un angle de 0 à 45° avec une perpendiculaire à la surface d'appui inférieure (13) de l'insert de coupe (1),
**caractérisé en ce que**
chaque insert de coupe individuel (2) est pourvu d'un dispositif de positionnement (3) qui coopère avec un dispositif complémentaire de positionnement (9) du corps de base (4) d'outil, et **en ce que** le tracé, en vue de côté, de la surface libre (17) de la fente (12) comporte un point de profondeur maximale (18) par rapport à la surface d'appui inférieure (13), qui est disposé, dans la direction allant de l'arête de coupe (19) vers l'extrémité de chaque insert de coupe individuel (2), à une certaine distance d'une perpendiculaire (25) à la surface d'appui (13) passant par l'arête de coupe (19), ou qui au moins ne dépasse pas cette perpendiculaire (25) dans la direction opposée.

2. Insert de coupe (1) en forme de lames selon la revendication 1, **caractérisé en ce que** la fente (12) est ménagée par un processus de meulage.

3. Insert de coupe (1) en forme de lames selon la revendication 1 ou 2, **caractérisé en ce que** le dispositif de positionnement (3) consiste en un ou plusieurs évidements et/ou saillies dans la surface d'appui inférieure (13) et/ou supérieure (14), qui coopèrent avec le dispositif de positionnement (9) qui comporte un ou plusieurs évidements et/ou saillies formés d'une façon complémentaire correspondante dans la contre-surface inférieure (15) et/ou ou supérieure (16) de l'évidement (5).

4. Insert de coupe (1) en forme de lames selon l'une quelconque des revendications précédentes, **caractérisé en ce que** chaque insert de coupe individuel (2) se compose d'une zone de serrage (20) et d'une zone d'insert (21), l'épaisseur D de la zone de serrage (20) étant comprise dans la plage de 1 à 10 fois l'épaisseur de la zone d'insert (21).

5. Insert de coupe (1) en forme de lames selon l'une quelconque des revendications précédentes, **caractérisé en ce qu'**il se compose de métal dur et est exécuté en tant qu'ébauche formée d'un seul tenant et frittée.

6. Outil de soyage ou fraise à disque, comprenant un corps de base (4) d'outil comportant un évidement allongé longitudinalement (5) et un dispositif de positionnement (9), et équipé d'un insert de coupe (1) en forme de lames selon l'une quelconque des revendications précédentes, **caractérisé en ce que** le corps de base (4) d'outil comprend, dans la zone avant de l'évidement (5), une fente allongée (11) de manière à constituer une griffe de serrage élastique (7) qui est déformable pour fixer l'insert de coupe (1) sur la partie rigide du corps de base (4) d'outil au moyen d'une vis de serrage (8).

7. Outil de soyage ou fraise à disque selon la revendication 6, **caractérisé en ce qu'**un ou plusieurs aimants (10) sont enfoncés dans la surface latérale (22) de l'évidement (5) pour mieux guider et fixer l'insert de coupe (1) en forme de lames.
